(19) Europäisches Patentamt European Patent Office Office européen des brevets

(11) **EP 3 726 205 B1**

(12) **EUROPEAN PATENT SPECIFICATION**

(45) Date of publication and mention of the grant of the patent:
**03.01.2024 Bulletin 2024/01**

(21) Application number: **19169736.6**

(22) Date of filing: **17.04.2019**

(51) International Patent Classification (IPC):
**G01N 23/223** (2006.01)    **G01N 23/083** (2018.01)

(52) Cooperative Patent Classification (CPC):
**G01N 23/223; G01N 23/083;** G01N 2223/04;
G01N 2223/076; G01N 2223/316; G01N 2223/33;
G01N 2223/414

(54) **METHOD FOR OBTAINING STEREOSCOPIC IMAGE INFORMATION**

VERFAHREN ZUM ERHALTEN VON INFORMATIONEN EINES STEREOSKOPISCHEN BILDES

PROCÉDÉ D'OBTENTION D'INFORMATIONS D'IMAGES STÉRÉOSCOPIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.10.2020 Bulletin 2020/43**

(73) Proprietor: **Bruker Nano GmbH 12489 Berlin (DE)**

(72) Inventor: **Waldschläger, Ulrich 12685 Berlin (DE)**

(74) Representative: **Gulde & Partner Patent- und Rechtsanwaltskanzlei mbB Wallstraße 58/59 10179 Berlin (DE)**

(56) References cited:
WO-A1-2007/043390     WO-A1-2016/092300
CN-A- 108 344 758     DE-B3-102006 036 272
DE-U1-202007 012 956     US-A- 646 362

• VOROB'EV ET AL: "RADIATION FLAW DETECTOR FOR TESTING INHOMOGENEOUS MATERIALS", SOV. J. NDT,, vol. 10, no. 3, 1 June 1974 (1974-06-01), pages 277-280, XP001417437,

## Description

## Field of the Invention

The present invention relates to a method for obtaining stereoscopic image information in an X-ray imaging and detection system, particularly in an X-ray fluorescence, XRF, spectrometer. The invention further relates to an X-ray imaging and detection system, particularly to an XRF spectrometer with polycapillary X-ray optic and an aperture system as well as to the use of such an aperture system for obtaining stereoscopic image information.

## Technological Background

X-ray fluorescence spectrometry, XRF, is widely used in scientific and commercial applications for non-destructive investigation of the composition of materials. Therein a target to be investigated is exposed to an incident beam of short-wavelength X-rays in contrary to the incident electron beams in energy dispersive X-ray spectroscopy, EDX. In response to the incident beam the target emits element specific fluorescence radiation that can be used for analyzing the elemental composition of the target. Additionally, a transmitted fraction of the incident X-ray beam can be detected for further information on the elemental composition.

It is usually distinguished between different standard methods of XRF, namely between the total reflection X-ray fluorescence spectrometry (TXRF), the grazing-incidence X-ray fluorescence spectrometry (GIXRF) and the micro X-ray fluorescence spectrometry (micro-XRF micro-RFA or $\mu$-RFA), wherein the latter can be also performed with a three dimensional excitation volume as a 3D-$\mu$-RFA or 3D-$\mu$-XRF by using polycapillary optical lenses.

A typical XRF setup comprises an X-ray source, the excited radiation of which may pass trough a variety of filters before being directed onto a sample by a suitable X-ray optic. Depending on the application such X-ray optics may comprise one or more of a zone plate, a polycapillary optic and a compound refractive lens. Polycapillary lenses are particularly suitable for $\mu$-XRF and usually consist of a plurality of small hollow glass tubes that are arranged in an array and that each guide X-rays via a plurality of total internal reflections.

A polycapillary lens images one X-ray point source to another. The polycapillary lens may thus be integrated in a XRF device via a goniometer or a similar device that allows for pivoting the optics in two or more spatial directions in order to raster a sample. An example of such scanning X-ray device utilizing a polycapillary lens is disclosed in WO 2016023975 A1.

The fluorescence radiation emitted by the sample may pass further filters before it is directed through a spectral analyzer for separation the distinct frequency components therein. The spectral analyzer might be upstream to or integrated into a detector that is configured to provide detector signals correspondingly to the intensity of the respective spectral components. As each of the emitted frequency signals corresponds to a certain element in the sample, the concentration of these elements can be determined based on these signals.

Further, a fraction of the incident X-ray transmitted through the sample may be detected by a photodetector disposed downstream the sample in propagation direction of the incident radiation. Based on the transmitted fraction, the spectral absorption of the X-ray radiation in the sample can be determined, wherein the detected absorption edges provide additional information on the local geometric as well as on the electronic structure of the sample. The skilled person is aware of applicable X-ray absorption spectroscopy (XAS) techniques.

As set forth above, both XRF and XAS can be used for performing structural analysis of a sample, e.g., for obtaining the topography of the sample. However, in conventional imaging techniques such topography can usually only be recorded as 2D projection of the surface structure. If depth information of the surface structure shall be obtained, stereoscopic image information of the surface structure could be detected. As indicated above, the imaging process in scanning XRF applications is mainly determined by the excitation beam path and not by the detection beam path. Hence, such stereoscopic information will usually be obtained by manipulating the excitation beam path, particularly with respect to a polycapillary lens, for obtaining perspectively shifted image information and thus parallax information. Contrarily, by changing a detector orientation, no stereoscopic information could be obtained.

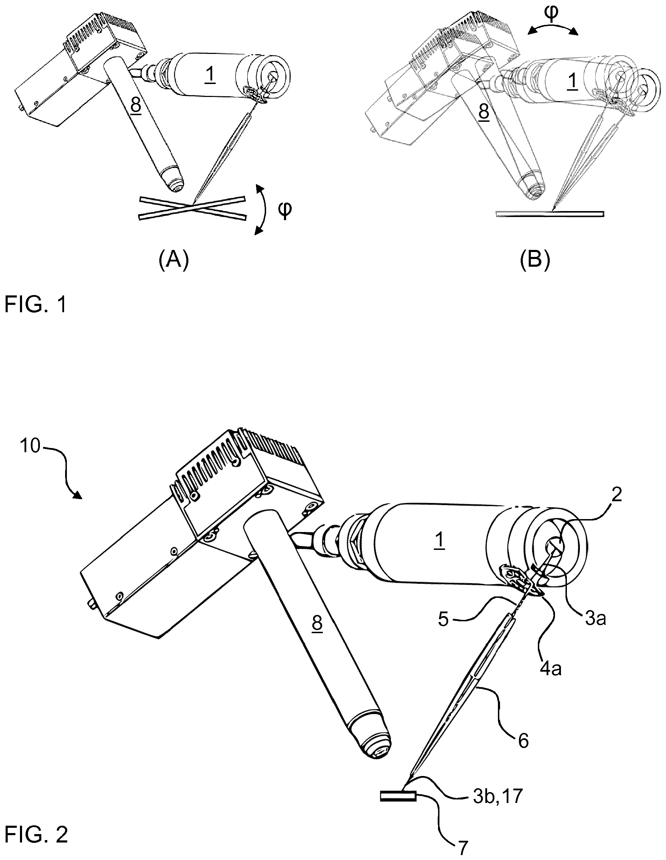

As illustrated in Figure 1, in principal stereoscopic information can be obtained by changing an angular relation between the polycapillary lens and the sample and by thus obtaining image information of the sample from two different perspectives. For changing the angular relation, a target stage supporting the sample during measurement could be tilted as shown in Figure 1a. Due to the tilting, a perspectively shift (parallax) is generated due to the distance between a respective scanning sample point and the polycapillary lens. However, at least for spatially extended samples (stages), this tilting yields the risk of colliding the sample (stage) with the X-ray optic and/or the detector during the scanning process. Alternatively, the combination of X-ray optics and detector as a whole could be tilted as illustrated in Figure 1b. However, providing such tilting mechanism is cumbersome, particularly in an evacuable imaging system ($\mu$XRF system).

An example of stereoscopic imaging where tilting is used to obtain different incident angles is WO2007/043390 A1.

An example of stereoscopic x-ray imaging without tilting is US646362 where two separate x-ray sources are used and where a system of two apertures which are opened and closed in an alternating manner produces a stereoscopic image on a fluorescent screen which is observed by a human operator.

DE 102006036272 B3 discloses a method for shifting an illuminated area on an x-ray detector to an eccentric position on the detector without altering the corresponding illuminated area on the object in order to allow for a so-called eccentric collimation.

WO 2016/092300 A1 discloses the use of a micro XRF spectrometer having a microfocus tube as an X-ray tube for generating a fingerprint for a gemstone using X-ray imaging It is thus an object of the present invention to provide a method and an X-ray imaging and detection system that are capable of overcoming or at least reducing the aforementioned disadvantages of the prior art and particularly of obtaining stereoscopic image information in a simple manner that can be integrated into a variety of devices, e.g., XRF/XAS devices.

**Description of the invention**

According to the present invention, the objective is solved and the disadvantages of the prior art are overcome or at least reduced by the method, system and use according to the claims. An aspect of the present invention relates to a method for obtaining stereoscopic image information in an X-ray imaging and detection system. The X-ray imaging and detection system preferably is an X-ray fluorescence, XRF, spectrometer that is configured for measuring X-ray fluorescence emitted by a target in response to incident X-ray radiation. Additionally or alternatively, the X-ray imaging and detection system might be configured as XAS system for detecting X-ray transmission through a target.

The X-ray imaging and detection system used in the method of the invention comprises an X-ray tube with an anode that is configured for emitting a divergent X-ray beam. Preferably, in a first approximation the anode resembles a point source. The divergent X-ray beam emitted by the X-ray tube might be referred to as primary divergent X-ray beam in the following.

The X-ray imaging and detection system used in the method of the invention further comprises a capillary lens, preferably a polycapillary lens, which is configured to focus the divergent X-ray beam as a convergent X-ray beam onto the target. Focusing polycapillary lenses are known to the person skilled in the art and a review thereof can be found in the article: Carolyn A. MacDonald, "Focusing Polycapillary Optics and Their Applications" in X-Ray Optics and Instrumentation, vol. 2010, Article ID 867049. The convergent X-ray beam focused by the polycapillary lens might be referred to as primary convergent X-ray beam in the following.

According to the present invention, the X-ray imaging and detection system used in the method of the invention further comprises an aperture system. The aperture system can be positioned upstream or downstream of the polycapillary lens in a propagation direction of the X-ray beam emitted by the X-ray tube. Preferably, the aperture system is positioned between the anode of the X-ray tube and the capillary lens, particularly between the anode of the X-ray tube and an entrance aperture of the capillary lens. The aperture system preferably comprises at least one mean for selectively reducing a beam cross section of the divergent and/or convergent X-ray beam. The at least one mean for selectively reducing a beam cross section preferably is at least one of a pinhole, a slit, an aperture, a shutter, screen, or the like. Preferably, the aperture system comprises at least one mean for selectively reducing a beam cross section of the divergent and/or convergent X-ray beam in an eccentrical manner, i.e., rotational-asymmetric with respect to an optical axis of the polycapillary lens.

The at least one mean for selectively reducing a beam cross section of the divergent and/or convergent X-ray beam is further preferably configured to be disposed in the divergent and/or convergent X-ray beam, particularly at one or more eccentrical positions in the X-ray beam. The at least one mean for selectively reducing a beam cross section is configured to let pass X-rays in a certain area of the X-ray beam and to block the remaining X-rays. The at least one mean is configured such that this certain area is shifted with respect to an optical axis of the polycapillary lens, such that the passing X-rays enter the polycapillary lens at an outer part of the entrance aperture but not at the center of the entrance aperture thereof.

The X-ray imaging and detection system further comprises a control unit configured for scanning the convergent X-ray beam over a scanning grid of the target.

The X-ray imaging and detection system further comprises a detector that is configured for detecting X-ray fluorescence radiation that is emitted (i.e., X-ray fluorescence) or transmitted (i.e., a XAS signal) by the target. Suitable detectors are known to the person skilled in the art. The positioning of the detector either upstream or downstream the target with respect to the propagation direction of the incident X-ray beam depends on the signal to be detected.

The method of the invention comprises the step of cropping an eccentrical first partial X-ray beam from the divergent or convergent X-ray beam with the aperture system. In other words, in the method of the invention, first a divergent and/or convergent X-ray beam is generated by the X-ray tube and/or the polycapillary lens and then a first partial X-ray beam is cropped therefrom at a position that is shifted from an optical axis of the polycapillary lens. Preferably, a beam cross section of the partial X-ray beam is less than a beam cross section of the primary X-ray beam. Further preferred, the at least one mean for selectively reducing a beam cross section of the primary X-ray beam is used for cropping the first partial beam.

The first partial X-ray beam is then used in the method of the invention for illuminating a grid point of the target. In response thereto, the target emits X-ray fluorescence from the grid point or transmits non-absorbed photons related to the grid point. Then a first image signal is obtained from the grid point by the detector, which might be either a XRF or a XAS signal. Therein, the first image signal is based on X-ray radiation that has been emitted or transmitted from the sample grid point in response to the incident first partial X-ray beam.

The method of the invention further comprises the step of cropping an eccentrical second X-ray beam from the divergent or convergent X-ray beam with the aperture system. In other words, in the method of the invention after the first partial X-ray beam is cropped from the primary beam, a second partial X-ray beam is cropped from the primary X-ray beam at a position that is shifted from an optical axis of the polycapillary lens. Again, a beam cross section of the second partial X-ray beam is less than a beam cross section of the primary X-ray beam. Further preferred, the at least one mean for selectively reducing a beam cross section of the X-ray imaging and detection system is used for cropping the second partial beam from the primary X-ray beam. Further preferred, the second partial X-ray beam is different from the first partial X-ray beam, particularly preferred the position of the second primary partial X-ray beam is different from that of the first partial X-ray beam.

The second partial X-ray beam is then used in the method of the invention for illuminating the grid point of the target, i.e., the same grid point that has been illuminated by the first partial X-ray beam before. In response thereto, the target emits X-ray fluorescence from the grid point or transmits non-absorbed photons related to the grid point. Then a second image signal is obtained from the grid point by the detector, which might be either a XRF or a XAS signal. Therein, the second image signal is based on X-ray radiation that has been emitted or transmitted from the sample grid point in response to the incident second partial X-ray beam.

In other words, in the method of the invention, the aperture system is preferably set to a first state, wherein a first partial X-ray beam is cropped from the primary X-ray beam and a second state, wherein a second partial X-ray beam X-ray is cropped from the primary X-ray beam. Therein, the partial X-ray beams are fully located within the space previously occupied by the primary X-ray beam. Further preferred, the aperture system has a third state, wherein the primary divergent or convergent X-ray beam is uncropped. In the context of the present application, cropping a primary X-ray beam refers to reducing a beam cross section of the primary X-ray beam for generating a first partial X-ray beam and a second partial X-ray beam.

Within the method of the present invention, specific characteristics of capillary, preferably polycapillary optics, are utilized for effectively obtaining a stereoscopic image signal. Preferably, the capillary lens of the spectrometer of the invention essentially images a point source, e.g. a front focal point, on an image point, i.e. rear focal point, in a symmetric fashion. Therein, an angle of a partial beam entering an entrance aperture of the polycapillary lens to an optical axis of the lens is preferably directly related (particularly preferred identical) to an angle of the partial beam exiting the exit aperture of the polycapillary lens to an optical axis of the lens. In other words, if two partial beams have different angles with respect to the optical axis of the lens on entering the lens, those partial beams will also have different angles with respect to the optical axis on exiting the lens. Hence, by cropping partial beams, preferably from a single primary X-ray beam, a sample can be illuminated with two perspectively changed X-ray beams and hence parallax information can be obtained using signals related to those separate illuminations. Hence, instead of tilting a sample stage or a whole X-ray imaging and detection system, in the method of the invention solely two different partial X-ray beams have to be cropped from the X-ray beam for illumination, which is much simpler.

From the at least two image signals related to those at least two partial X-ray beams incident on a single grid point of the sample, a stereoscopic image signal is then generated in an usual manner. Thus, the method of the invention enables the skilled person to easily generate a stereoscopic image. The method of the invention can be advantageously carried out for each grid point of the sample for obtaining a stereoscopic image of the whole sample.

In a preferred embodiment of the method of the invention, the first primary X-ray beam and the second primary X-ray beam are both cropped from the divergent X-ray beam. In this embodiments advantageously large parts of any scatter that may result from cropping the divergent X-ray beam between anode and capillary lens are not imaged to the rear side of the capillary lens as the scattered radiation mostly does not satisfies the conditions for total internal reflections within the capillaries of the capillary lens. Hence, this embodiment is advantageous over cropping the primary X-ray beam on the rear side of the capillary lens. Further, the integration of the aperture system in the front of the capillary lens is easier than the integration in the rear of the polycapillary lens due to more available construction space.

In the method of the invention, the step of obtaining the first image signal preferably comprise the step of detecting X-rays that were emitted and/or transmitted from the grid point in response to first partial X-ray beam being incident on the grid point. In the same manner, the step of obtaining the second image signal preferably comprises detecting X-rays emitted and/or transmitted from the grid point in response to second partial X-ray beam being incident on the grid point. In other words, the partial beams are used for exiting the target sample at the grid point and fluorescence photons or absorption edges related to this excitation are detected. These steps are preferably performed for each of a plurality of grid points of a scanning grid of the target, i.e., preferably first and second image signals are obtained for each of a plurality of grid points of a scanning grid of the target after each of those grid points was exited by the first partial X-ray beam and, separately, by the second partial X-ray beam.

According to a further preferred embodiment, the method of the invention further comprises the step of scanning the target in at least one of an X- and Y-direction. Therein, line- or point-wise scanning of the target is preferably enabled via a movable target stage, X-ray source and/or X-ray optic that are controlled by a control unit configured for scanning of the target. In the method of the present invention, in such a scanning along the target, each grid point of a scanning grid is illuminated separately by the first and by the second partial X-ray beam. Also the cropping of the first and second partial X-ray beam at each of the grid points as well as the obtaining of the first and second image signals for each of the grid points is preferably performed under the control of the control unit of the X-ray imaging and detection system.

In a particularly preferred embodiment of the method, the convergent X-ray beam, i.e., X-ray beam downstream of the polycapillary lens, is scanned over the grid points of the scanning grid, wherein scanning of the scanning grid comprises obtaining a first image signal and a second image signal for one grid point before shifting to another grid point. In other words, for each grid point the two image signals are obtained directly after each other, thus providing a good temporal correlation of the first and second image signals. In another preferred embodiment, the scanning of the scanning grid comprises obtaining first image signals for each grid point of a row or column of the scanning grid before obtaining second image signals for each grid point of the row or column of the scanning grid. In other words, a whole line or row is first scanned by the first partial X-ray beam before the same row or column is scanned by the second partial X-ray beam. Hence, image acquisition is advantageously accelerated. In another preferred embodiment, first image signals are obtained for each grid point of a row or column while scanning the row or column of the scanning grid in a direction before second image signals are obtained for each grid point of the same row or column while scanning the row or the column in the opposite direction, in order to further accelerate the data acquisition.

In the method of the invention, the first partial X-ray beam is preferably cropped such that it is eccentrical (i.e., shifted) with respect to an optical axis of the polycapillary lens. Further preferred, also the second partial X-ray beam is cropped such that it is eccentrical with respect to the optical axis of the polycapillary lens. Further preferred, the first partial X-ray beam is different from the second partial X-ray beam, i.e., positioned at a different position within the primary X-ray beam and/or with respect to the optical axis of the polycapillary lens. This advantageously guarantees that the first partial X-ray beam, after exiting the polycapillary lens, hits the target surface with a specific first angle that is different from a second angle under which the second partial X-ray beam hits the target surface after exiting the polycapillary lens.

Due to the different first and second angle, perspectively shifted first and second image signals are generated from the target surface. As the first partial X-ray beam and the second partial X-ray beam preferably hit the target surface at the same position, i.e., at one of a plurality of grid points, the perspectively shifted image signals are advantageously used for generating a stereoscopic image signal related to the grid point. In other words, preferably a first incidence angle of the first partial X-ray beam on the target differs from a second incidence angle of the second partial X-ray beam on the target, wherein the incidence angles correspond to the sifting distance of the first and second partial X-ray beams with respect to the optical axis of the polycapillary lens.

In a particularly preferred embodiment, the aperture system comprises at least one pinhole. In other words, the at least one mean configured for selectively reducing a beam cross section as described above is preferably configured as at least one pinhole. According to this embodiment of the method the cropping of the first partial X-ray beam is preferably carried out by inserting one of the at least one pinhole eccentrically in the divergent or convergent X-ray beam. Then, cropping the second partial X-ray beam is preferably performed by shifting the one pinhole eccentrically in the divergent or convergent X-ray beam. Hence, the first and second partial X-ray beams can be advantageously generated using only a single pinhole. Alternatively, the step of cropping the second partial X-ray beam is performed by inserting another one of the at least one pinhole eccentrically in the divergent or convergent X-ray beam, i.e., different pinholes are used for cropping the first and second partial X-ray beams. This might advantageously increase the scanning speed in the method of the invention.

Although the method of the invention was mainly described with respect to the actual generation of a stereoscopic image signal, for which the method of the invention is suitable, the method of the invention is also suitable for using the first and second image signal for different purposes. Particularly preferred, the method of the invention further comprises the step of determining depth information of the grid point of the target based on the first image signal and the second image signal for the grid point. As set forth above, the first and second image signal encode parallax information of the sample grid point. Hence, by using trigonometric relations and/or measured reference structures the actual structure of the grid point in the z-direction, i.e., depth information of the grid point, can be determined. Hence topographic information of the sample can be obtained with the method of the invention.

The steps oft he method of the invention are preferably implemented by electric or electronic components (hardware) or by firmware (ASIC) or preferably become realized by running a suitable program (software). Also preferred, the steps of the method of the invention are carried out by a combination of hardware, firmware and/or software. Exemplarily, individual components may be configured as integrated circuits for carrying out individual steps of the method of the invention or may also be arranged in a common integrated circuit.

Further, various components of these devices for carrying out the steps of the claimed invention may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices for carrying out the method of the invention without departing from the invention. Particularly preferred, the method of the invention is carried out in a X-ray imaging and detection system as described above and under control of the control unit of such X-ray imaging and detection system that runs a suitable software and/comprises suitable hardware.

Another aspect of the invention relates to an X-ray imaging and detecting system according to the appended claims. The X-ray imaging and detecting system of the invention comprises an X-ray tube with an anode emitting a divergent X-ray beam. Preferably, in first approximation the anode resembles a point source. The divergent X-ray beam emitted by the X-ray tube might be referred to as primary divergent X-ray beam in the following. The X-ray imaging and detection system of the invention further comprises a capillary lens, preferably a polycapillary lens, which is configured to focus the divergent X-ray beam as a convergent X-ray beam on the target. Focusing polycapillary lenses are known to the person skilled in the art and a review thereof can be found in the article: Carolyn A. MacDonald, "Focusing Polycapillary Optics and Their Applications" in X-Ray Optics and Instrumentation, vol. 2010, Article ID 867049. The convergent X-ray beam focused by the polycapillary lens might be referred to as primary convergent X-ray beam in the following.

The X-ray imaging and detection system of the invention further comprises an aperture system that is configured for cropping an eccentrical first partial X-ray beam and an eccentrical second partial X-ray beam different from the first partial X-ray beam from the divergent X-ray beam or the convergent X-ray beam. The aperture system can be positioned upstream or downstream of the polycapillary lens in a propagation direction of the X-ray beam emitted by the X-ray tube. Preferably, the aperture system is positioned between the anode of the X-ray tube and the capillary lens, particularly between the anode of the X-ray tube and an entrance aperture of the capillary lens. The aperture system preferably comprises at least one mean for selectively reducing a beam cross section of the divergent and/or convergent X-ray beam. The at least one mean for selectively reducing a beam cross section preferably is at least one of a pinhole, a slit, an aperture, a shutter, screen, or the like.

The at least one mean for selectively reducing a beam cross section of the divergent and/or convergent X-ray beam is further preferably configured to be disposed in the divergent and/or convergent X-ray beam, particularly at one or more eccentrical positions in the X-ray beam. The X-ray imaging and detection system further comprises a detector that is configured for detecting X-ray fluorescence radiation that is emitted (i.e., X-ray fluorescence) or transmitted (i.e., a XAS signal) by the target. Suitable detectors are known to the person skilled in the art.

In a preferred embodiment of the system, the aperture system comprises at least one pinhole that is configured for being eccentrically inserted into the divergent X-ray beam or the convergent X-ray beam. Preferably, the aperture system can be set to a first state, wherein a first partial X-ray beam is cropped from the primary X-ray beam and can be set to a second state, wherein a second partial X-ray beam X-ray is cropped from the primary X-ray beam. Therein, the partial X-ray beams are preferably disposed fully within the space previously occupied by the primary X-ray beam. Further preferred, the aperture system has a third state, wherein the primary divergent or convergent X-ray beam is uncropped. The shape of the at least one pinhole might be circular or rectangular, while other shapes are preferred as well.

According to a particularly preferred embodiment of the system, the aperture system comprises a revolver having at least one pinhole that is configured for being inserted to at least two different eccentrical positions of the divergent X-ray beam or the convergent X-ray beam. Preferably the revolver is configured to crop either the first partial X-ray beam or the second partial X-ray beam based on a rotational position of the revolver. Alternatively, the aperture system comprises a slider having at least one pinhole that is configured for being inserted to at least two different eccentrical positions of the divergent X-ray beam or the convergent X-ray beam. Preferably the slider is configured to crop either the first partial X-ray beam or the second partial X-ray beam based on a translational position of the slider. In a most easy embodiment, the revolver or the slider may only comprise a single pinhole, the position of which within the X-ray beam can be varied. Hence, the method of the invention can be implemented by displacing the pinhole slightly from a central position around the optical axis of the polycapillary lens in a first direction and in an (opposite) second direction.

In an alternatively preferred embodiment, the aperture system comprises a revolver or a slider with a first pinhole configured for being inserted to a first eccentrical position of the divergent or convergent X-ray beam and with a second pinhole configured for being inserted to a second eccentrical position of the divergent or convergent X-ray beam, respectively. In such an embodiment, the revolver or the slider might require less movement for cropping either the first or the second partial X-ray beam and hence acquisition speed is increased.

Further preferred, the revolver or slider of the above embodiment further comprises at least one filter, particularly preferred a filter foil, for spectrally modifying the primary X-ray beam. Preferably, at least one spectral filter is disposed at the same translational position of the slider or the same rotational position of the revolver, respectively, as the at least one pinhole. In other words, the functionality of obtaining a stereoscopic image is integrated with a further functionality of spectrally modifying the primary X-ray radiation. In such an embodiment, preferably each of the at least one pinhole is combined with one of a plurality of identic filters.

According to an alternative embodiment of the spectrometer, at least one spectral filter is preferably disposed at a different translational position of the slider or at a different rotational position of the revolver, respectively, compared to the at least one pinhole. In such an embodiment, the functionalities of spectral modification and obtaining a stereoscopic image are provided separately by the aperture system. Such an embodiment might be used in a case that a spectral modification is solely required for a two-dimensional X-ray image.

Further preferred, the XRF spectrometer of the invention, comprises a revolver or slider with at least one pinhole as described above and further comprises an additional revolver or slider with at least one filter for spectrally modifying the divergent X-ray beam. Hence, functionalities regarding the spectral modification of the primary X-ray beam and of obtaining a stereoscopic image are integrated in the aperture system as a separate functional unit.

According to a further preferred embodiment, the XRF spectrometer of the present invention comprises a movable target stage that is configured for receiving the target and for being moved in X- and Y-direction, preferably also in Z-direction. Various implementations for moving a target or sample stage in one or more directions are known to the skilled person, The target stage may comprise micro actuators, linear actuators, piezo actuators and/or goniometers. Further preferred, the movable target stage is configured as at least one of a tip, tilt and/or rotation stages, e.g. as a zeta/xi tilt stage. Additionally or alternatively, preferably the X-ray source and/or the capillary optic of the XRF spectrometer of the present invention are configured to be pivotable and/or movable. Particularly preferred, the capillary optic of the XRF spectrometer of the invention is mechanically connected to a goniometer mechanism that is configured for pivoting the capillary optic about at least one pivoting axis, as e.g. described in WO 2016/023975 A1, the full content of which is incorporated herein. By providing the XRF spectrometer of the invention with a movable target stage, X-ray source and/or X-ray optic, a scanning, e.g. a line- or point-wise scanning of the target is enabled.

The XRF spectrometer of the present invention comprises a control unit that is configured for scanning the convergent X-ray beam over a scanning grid of the target. Preferably, the control unit is also configured for controlling the aperture system. Therein, the control unit is configured to obtain a first image signal and a second image signal for at least one grid point of a sample grid of a target, in order to obtain a stereoscopic image signal for the at least one grid point. The control unit is preferably configured to selectively insert the at least one pinhole into the primary X-ray beam, e.g., between the anode of the X-ray source and the capillary lens, at a first eccentrical position and, subsequently, at a second eccentrical position. Hence, the control unit is configured to selectively crop the first partial X-ray beam and, subsequently, the second partial X-ray beam. Further preferred, the control unit is configured for controlling at least one of the movable target stage, X-ray source and/or X-ray optic (capillary optic) for enabling scanning of the target. Further preferred, the control unit is configured for selectively cropping the first and second partial X-ray beam during such scanning of the target. Hence, stereoscopic image signals of a whole sample grid of a target, and thus a stereoscopic image of a whole target, might be obtained in the inventive method.

According to a preferred embodiment of the present invention, a front focal point of the capillary lens is placed at the anode of the X-ray tube of the spectrometer. By placing the source of the divergent X-ray beam at the front focal point of the capillary lens, advantageously all capillaries of the lens participate in the optical transmission of the X-rays.

Further preferred, the X-ray tube is a microfocus tube, preferably providing a focal spot of primary X-ray radiation in the micrometer range at the anode of the tube. Suitable microfocus tubes are known to the person skilled in the art. Particularly preferred the focal spot of primary X-ray radiation at the anode has a beam size, i.e. diameter of the beam cross section, between 1 $\mu$m and 500 $\mu$m and further preferred between 5 $\mu$m and 30 $\mu$m. An X-ray imaging and detecting system comprising such microfocus tube is a micro XRF spectrometer.

The aperture system is preferably disposed between the front focal point and the entrance aperture of the capillary lens and simulates a virtual source that may be considered to be positioned outside the focal point of the capillary lens. Preferably, the capillary lens has an entrance aperture, a front focal length, and a front aperture angle $\alpha$ that obey the equation

$$\tan \alpha = \frac{entrance\ aperture}{front\ focal\ length}$$

. The entrance aperture corresponds to the diameter of area of the light receiving sides of the capillaries of the lens. The front focal length corresponds to the distance between the front focal point and the entrance aperture and the front aperture angle is the angle enclosed between an X-ray travelling from the front focal point to an outermost capillary of the lens and an optical axis of the lens. The front focal length preferably corresponds to the distance between the entrance aperture and the anode.

Preferably, the capillary lens further has an exit aperture, a rear focal length, and a rear aperture angle β that obey the equation $\tan \beta = \frac{exit\ aperture}{rear\ focal\ length}$ . The exit aperture corresponds to the diameter of area of the light emitting sides of the capillaries of the lens. The rear focal length corresponds to the distance between the rear focal point and the exit aperture and the rear aperture angle is the angle enclosed between an X-ray travelling from an outermost capillary of the lens to the rear focal point and an optical axis of the lens. Preferably, the rear focal length corresponds to the distance between the exit aperture and the target. In other words, the target is positioned in the rear focal point of the capillary lens.

According to a preferred embodiment, the aperture system, particularly the at least one pinhole of the aperture system, is positioned at a minimum distance of 35 mm, further preferred of 30 mm and particularly preferred of 25 mm to the anode of the X-ray tube. Further preferred, the aperture system, particularly the at least one pinhole of the aperture system, is positioned at a minimum distance to the capillary lens that corresponds to maximal 85%, further preferred maximal 90 % and particularly preferred 95 % of the focal front focal length of the capillary lens. Further preferred the aperture system, particularly the at least one pinhole of the aperture system, is positioned at a position corresponding at least to 50 %, further preferred to at least 60 % and particularly preferred to at least 70 % of the front focal length of the capillary lens. The cropping of the partial X-ray beams is advantageously carried out more precisely the closer the at least one pinhole is positioned at the entrance aperture of the capillary lens. Positioning the at least one pinhole closer to the anode of the X-ray tube disadvantageously increases edge blurring of the collimation.

Another aspect of the present invention relates to the use of an aperture system in an X-ray imaging and detection system according to the invention as described above for obtaining stereoscopic image information by cropping an eccentrical first partial X-ray beam from an X-ray beam, by illuminating a grid point of a target with the first partial X-ray beam and by obtaining a first image signal from the grid point and by subsequently cropping an eccentrical second partial X-ray beam from the X-ray beam, by illuminating the grid point of a target with the second partial X-ray beam and by obtaining a second image signal from the grid point.

Another aspect of the present invention relates to a computer program that configures a data processing apparatus to perform a method for obtaining stereoscopic image information as described above after being loaded into a memory element of the data processing apparatus. The data processing apparatus preferably is connected to an X-ray imaging and detecting system, preferably to an XRF spectrometer, with an aperture system as described above. The present invention also relates to a computer readable memory element with a computer program as described above saved thereon, particularly with a computer program that allows a data processing apparatus to perform a method for obtaining stereoscopic image information as described above after being loaded to a memory element of the apparatus.

The electronic or electric devices and/or any other relevant devices or components according to embodiments of the present invention described herein, except those described explicitly as hardware, may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallization and/or pins, and/or may comprise conductive polymers. Further electrical energy might be transmitted via wireless connections, e.g. using radiation or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example a flash drive.

Also, a person of skill in the art should recognize that the functionality of various computing devices may be combined or integrated into a single computing device, or the functionality of a particular computing device may be distributed across one or more other computing devices without departing from the scope of the present invention.

Further aspects and preferred embodiments of the present invention result from the dependent claims, the drawings and the following description of the drawings. Different disclosed embodiments are advantageously combined with each other if not stated otherwise.

## Brief Description of the Drawings

The features of the invention become apparent to those skilled in the art by the detailed description of exemplary embodiments with reference to the attached drawings in which:

Figure 1 shows schematic illustrations of methods and devices for obtaining stereoscopic image information according to the prior art;

Figure 2 shows a schematic illustration of a XRF spectrometer according to an embodiment;

Figure 3 shows a schematic cross sectional illustration of a beam path in an XRF spectrometer according to an embodiment;

Figure 4 shows a schematic illustration of a scanning process for obtaining stereoscopic image information of a sample according to an embodiment;

Figure 5 shows schematic illustrations of detector set ups for obtaining stereoscopic image information of a sample according to embodiments; and

Figure 6 shows stereoscopic images obtained with an XRF spectrometer according to an embodiment, particularly (A) a stereoscopic image of a circuit board, (B) a stereoscopic image of a geological sample.

## Detailed Description of the Drawings

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

Figure 1 shows schematic illustrations of methods and devices for obtaining stereoscopic image information according to the prior art and has already been described above.

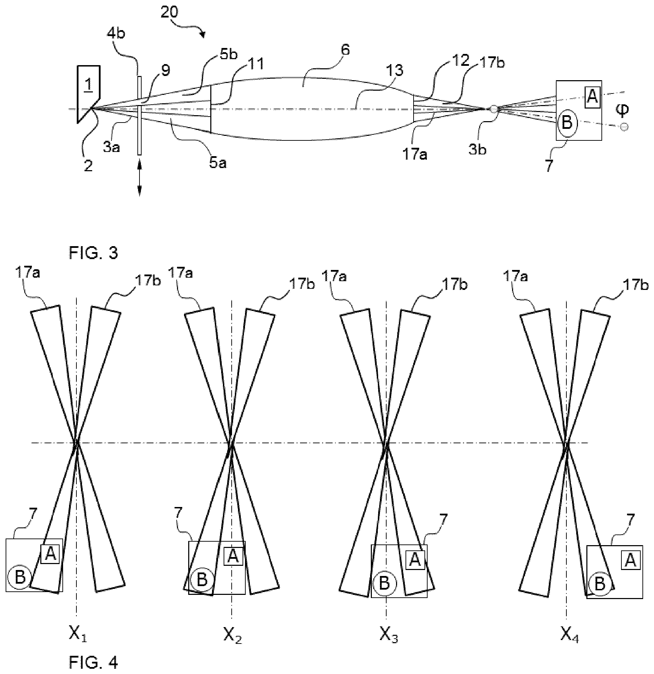

Figure 2 shows a schematic illustration of a micro XRF spectrometer 10 according to an embodiment and Figure 3 shows a cross sectional schematic illustration of an X-ray beam in a micro XRF spectrometer 10 according to an embodiment.

The XRF spectrometer 10 of Figure 2 comprises a microfocus X-ray tube 1 with an anode 2 that emits a divergent primary X-ray beam 3a. Parts of the divergent primary X-ray beam 3a are blocked outside of the X-ray tube 1 by an aperture system 4 in the form of a revolver 4a comprising at least one pinhole 9, wherein a position of the pinhole within the primary X-ray beam 3a depends on a rotational state of the revolver 4a. Particularly, the pinhole 9 can be placed at a first eccentrical position with respect to an optical axis 13 of the polycapillary lens 6 and can be placed at a second eccentrical position with respect to that optical axis 13.

Hence, depending on the eccentrical position of the at least one pinhole 9 with respect to the optical axis 13 of the polycapillary lens 6, either a first partial X-ray beam 5a or a second partial X-ray beam 5b is cropped from the primary X-ray beam 3a. In an alternative embodiment as shown in Figure 3, the generation of either the first partial X-ray beam 5a or a second partial X-ray beam 5b depends on a translational position of a slider 4b comprising at least one pinhole 9 within the beam cross section of the primary X-ray beam 3a.

The polycapillary lens 6 focusses the divergent X-ray beam 3a as a convergent X-ray beam 3b onto a target 7 that can be moved in X-, Y-, and Z-direction by a movable sample stage (not shown) of the spectrometer 10. Therein, the movable sample stage preferably comprises micro-actuators. Alternatively, a functional unit comprising the X-ray source 1, the aperture unit 4 and the polycapillary lens 6 is movable at least in an X- and Y-direction, preferably also in Z-direction. Therein, the functional unit can be pivoted via a goniometer, at least with respect to the X- and Y-direction. By providing at least one of such pivotable and/or movable functional unit and such movable target scanning of the target 7 is enabled.

X-ray fluorescence radiation emitted by the sample 7 in response to the incident X-rays and parts of the incident convergent X-ray beam with reduced cross section 5b that have been scattered or diffracted by the sample 7 are then measured by detector 8 that transfers the corresponding detector signals to a suitable electronic evaluation unit (not shown). By combining the movement of the sample 7 and the detection of radiation emitted by the sample 7, various properties of the sample 7 are determined in an imaging and/or spectrometric method with spectrometer 10.

As can be seen in of Figure 3, schematically illustrating the cross sectional beam path within the spectrometer 10 of the invention, by inserting the pinhole 9 at a specific eccentrical position within the primary divergent X-ray beam 3a, either the first partial X-ray beam 5a or a second partial X-ray beam 5b is cropped from the primary X-ray beam. Each of those first and second partial X-ray beam 5a, 5b is directed to the entrance aperture 11 of the polycapillary lens 6, wherein the first partial X-ray beam 5a illuminates a first eccentrical section of the entrance aperture 11 and the second partial X-ray beam 5b illuminates a second eccentrical section of the entrance aperture 11. Hence, the divergent first partial X-ray beam 5a is focused by the polycapillary lens 6 to a convergent first partial X-ray beam 17a a leaving the polycapillary lens 6 via a first eccentrical section of its exit aperture 12. Further, the divergent second partial X-ray beam 5b is focused by the polycapillary lens 6 to a convergent second partial X-ray beam 17b a leaving the polycapillary lens 6 via a second eccentrical section of its exit aperture 12. Then, each of the convergent partial X-ray beams 17a, 17b hits the target with another incident angle (and slightly shifted position).

Figure 4 schematically illustrates a scanning process of the target 7 for obtaining stereoscopic image information of the target 7. Therein, a convergent first partial X-ray beam 17a and a convergent second partial X-ray beam 17b are scanned over the target comprising a first grid point (or structure element) A and a second grid point (or structure element B). By moving the sample (stage) to a first measuring position X1, the second partial X-ray beam 17b is incident on the first grid point A and a first image signal from first grid point A can be obtained. By moving the sample (stage) to a second measuring position X2, the second partial X-ray beam 17b is incident on the second grid point B and a first image signal from second grid point B can be obtained. By moving the sample (stage) to a third measuring position X3, the first partial X-ray beam 17a is incident on the first grid point A and a second image signal from first grid point A can be obtained. Finally, by moving the sample (stage) to a fourth measuring position X4, the first partial X-ray beam 17a is incident on the second grid point B and a second image signal from second grid point B can be obtained. As the sample is positioned downstream of a rear focal point (indicated by the horizontal dashed line in Figure 4) in propagation direction of the X-ray beams, the measurement positions obey the relation that $(X3-X1) < (X4-X2)$ in order obtain good quality first and second image signals. Hence, by scanning the sample as illustrated in Figure 4, image signals are recorded that enable the generation of stereoscopic image signals from the first and second grid points A,B.

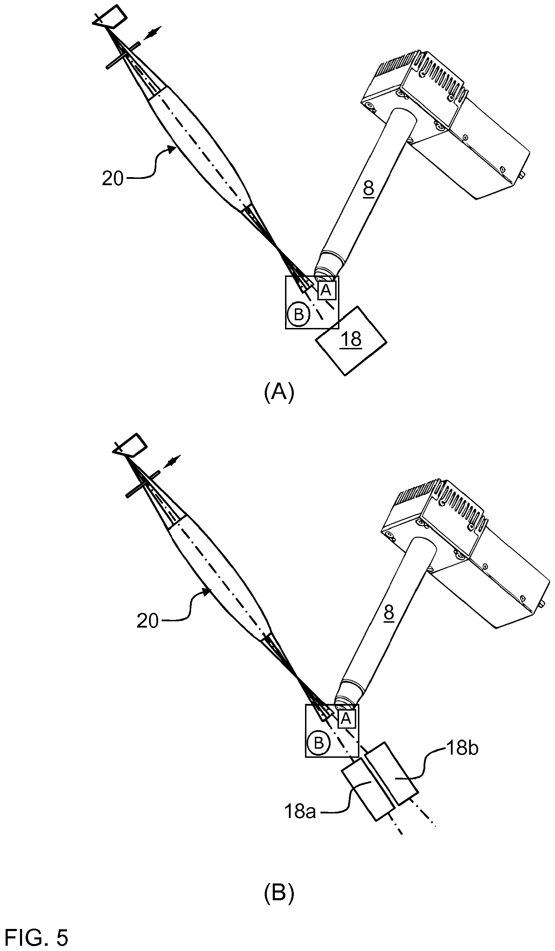

Figure 5 shows schematic illustrations of detector set ups for obtaining stereoscopic image information of a sample according to embodiments. Therein, not only a fluorescence signal of the target 7 is detected via a fluorescence detector 8 but additionally an absorption of the X-rays within the target 7 is detected by an X-ray transmittance detector 18 positioned downstream the target 7 in a propagation direction of the X-ray beam. According to Figure 5(A), the transmission signal is detected by a single X-ray transmittance detector 18 subsequently for the first and second partial X-ray beam 17a, 17b. However, according to Figure 5(B), a first X-ray transmittance detector 18a is positioned in the beam path of the transmitted first partial X-ray beam 17a and a second X-ray transmittance detector 18b is positioned in the beam path of the transmitted second partial X-ray beam 17b. Hence, the transmittance signals for both partial X-ray beams can be detected simultaneously which allows for increased image acquisition speed as simultaneous detection of the partial beams 17a, 17b is enabled.

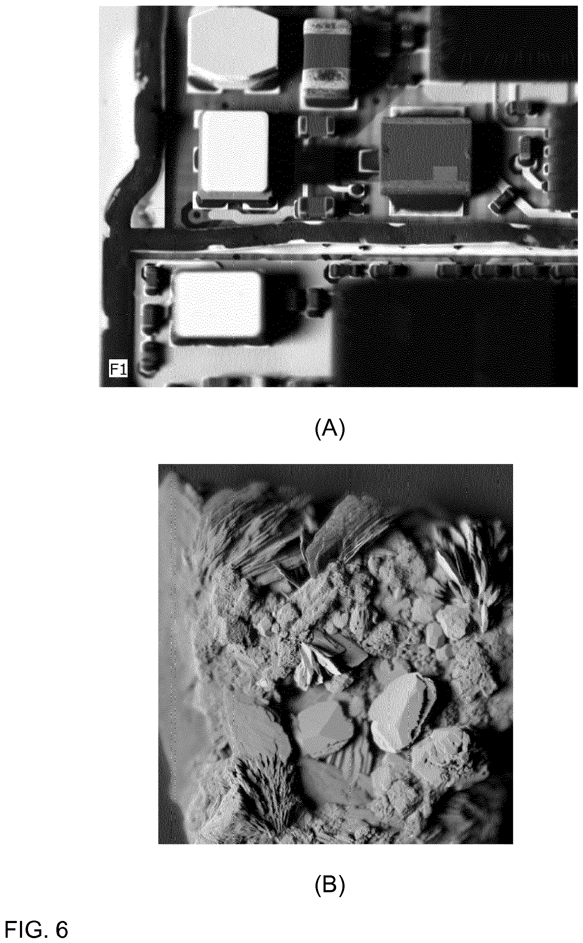

Figure 6 illustrates stereoscopic images obtained with an XRF spectrometer 10 according to an embodiment. Particularly, Figure 6(A) shows a stereoscopic image obtained for a circuit board of a smartphone and Figure 6(B) shows a stereoscopic image obtained for a geological sample. Both images are configured to be viewed with glasses having one red glass and one cyan glass (conventional 3D glasses) for perceiving the 3D stereoscopic information. Both images illustrate the total X-ray intensity detected for the first and second partial X-ray beam, respectively colour coded to one of the red and cyan image signal. However, in the same manner stereoscopic images for individual elements of a target could be obtained by using frequency-selected image signals, i.e., specific X-ray fluorescence signals, of the target 7.

**Reference signs**

| | |
|---|---|
| 1 | X-ray tube |
| 2 | anode (of X-ray tube) |
| 3a | divergent primary X-ray beam |
| 3b | convergent primary X-ray beam |
| 4 | aperture system |
| 4a | revolver |
| 4b | slider |
| 5a | first partial X-ray beam (divergent) |
| 5b | second partial X-ray beam (divergent) |
| 6 | capillary lens |
| 7 | target |
| 8 | X-ray fluorescence detector |
| 9a; 9b | pinholes |
| 10 | XRF spectrometer |
| 11 | entrance aperture |
| 12 | exit aperture |
| 13 | optical axis |
| 17a | first partial X-ray beam (convergent) |
| 17b | first partial X-ray beam (convergent) |
| 18(a,b) | (first, second) X-ray transmittance detector |
| 20 | X-ray optics |

**Claims**

1. Method for obtaining stereoscopic image information in an X-ray imaging and detection system (10) comprising an X-ray tube (1) with an anode (2) emitting a divergent X-ray beam (3a), a capillary lens (6) configured to focus the divergent X-ray beam (3a) as a convergent X-ray beam (3b) on a target (7), an aperture system (4), a control unit configured for scanning the convergent X-ray beam (3b) over a scanning grid of the target (7), and a detector (8, 18) configured for detecting X-ray radiation emitted or transmitted by the target (7), the method comprising the steps of:

    cropping an eccentrical first partial X-ray beam (5a, 17a) from the divergent or convergent X-ray beam (3a, 3b) with the aperture system (4), illuminating a grid point of the scanning grid of the target (7) with the focused first partial X-ray beam (17a) and obtaining a first image signal from the grid point;
    cropping an eccentrical second partial X-ray beam (5b, 17b) from the divergent or convergent X-ray beam (3a, 3b) with the aperture system (4), illuminating the grid point of the scanning grid of the target (7) with the focused second partial X-ray beam (17b) and obtaining a second image signal from the grid point; and
    combining the first image signal of the grid point and the second image signal of the grid point for generating a stereoscopic image signal of the grid point.

2. Method according to claim 1, wherein obtaining the first image signal comprises: detecting, with the detector (8, 18), X-rays emitted and/or transmitted in response to focused first partial X-ray beam (17a) being incident on the grid point; and wherein obtaining the second image signal comprises detecting, with the detector (8, 18), X-rays emitted and/or transmitted in response to the focused second partial X-ray beam (17b) being incident on the grid point.

3. Method according to claim 1 or 2, wherein first and second image signals are obtained for each of a plurality of grid points of a scanning grid of the target (7).

4. Method according to claim 3, wherein the convergent X-ray beam (3b) is scanned over the grid points of the scanning grid and scanning of the scanning grid comprises:

    obtaining a first image signal and a second image signal for one grid point before shifting to another grid point;
    obtaining first image signals for each grid point of a row or column of the scanning grid before obtaining second image signals for each grid point of the row or column of the scanning grid; or obtaining first image signals for each grid point of a row or column while scanning the row or column of the scanning grid in a direction before obtaining second image signals for each grid point of the row or column while scanning the row or column in the opposite direction.

5. Method according to any one of the preceding claims, wherein the first partial X-ray beam (5a, 17a) and/or the second partial X-ray beam (5b, 17b) is eccentrical with respect to an optical axis (13) of the polycapillary lens (6), and wherein the first partial X-ray beam (5a, 17a) is different from the second partial X-ray beam (5b, 17b).

6. Method according to any of the preceding claims, wherein the aperture system (4) comprises at least one pinhole (9), the method comprising the steps of:

    cropping the first partial X-ray beam (5a, 17a) by inserting one of the at least one pinhole (9) eccentrically in the divergent or convergent X-ray beam (3a, 3b); and
    cropping the second partial X-ray beam (5b, 17b) by shifting the one pinhole (9) eccentrically in the divergent or convergent X-ray beam (3a, 3b); or
    cropping the second partial X-ray beam (5b, 17b) by inserting another one of the at least one pinhole (9) eccentrically in the divergent or convergent X-ray beam (3a, 3b).

7. Method according to any one of the preceding claims, wherein a first incidence angle of the focused first partial X-ray beam (17a) on the target (7) differs from a second incidence angle of the focused second partial X-ray beam (17b) on the target (7).

8. Method according to any one of the preceding claims, further comprising the step of: determining depth information of the grid point of the target (7) based on the first image signal and the second image signal for the grid point.

9. X-ray imaging and detecting system (10), comprising:

an X-ray tube (1) with an anode (2) emitting a divergent X-ray beam (3a);
a capillary lens (6) configured to focus the divergent X-ray beam (3a) as a convergent X-ray beam (3b) on the target (7);
a detector (8, 18) configured for detecting X-ray radiation emitted or transmitted by the target (7);
an aperture system (4); and
a control unit configured for controlling:

scanning a scanning grid of the target (7) with the convergent X-ray beam (3b),
selectively cropping an eccentrical first partial X-ray beam (5a, 17a) from the divergent X-ray beam (3a) or from the convergent X-ray beam (3b), for illuminating a grid point of the scanning grid of the target (7) with the focused first partial X-ray beam (17a) and obtaining a first image signal from the grid point;
selectively cropping an eccentrical second partial X-ray beam (5b, 17b) different from the first partial X-ray beam (5a, 17a) from the divergent X-ray beam (3a) or from the convergent X-ray beam (3b), for illuminating the grid point of the scanning grid of the target (7) with the focused second partial X-ray beam (17b) and obtaining a second image signal from the grid point; and
combining the first image signal of the grid point and the second image signal of the grid point for generating a stereoscopic image signal of the grid point.

10. X-ray imaging and detecting system (10) according to claim 9, wherein the aperture system (4) comprises at least one pinhole (9) configured for being selectively inserted into the divergent X-ray beam (3a) or into the convergent X-ray beam (3b) at eccentrical positions with respect to the optical axis (13) of the capillary lens (6).

11. X-ray imaging and detecting system (10) according to claim 9 or 10, wherein the aperture system (4) comprises a revolver (4a) or a slider (4b), each having at least one pinhole (9) configured for being inserted to at least two different eccentrical positions of the divergent X-ray beam (3a) or of the convergent X-ray beam (3b).

12. X-ray imaging and detecting system (10) according to claim 9 or 10, wherein the aperture system (4) comprises a revolver (4a) or a slider (4b), each having a first pinhole configured for being inserted to a first eccentrical position of the divergent or convergent X-ray beam (3a, 3b) and a second pinhole configured for being inserted to a second eccentrical position of the divergent or convergent X-ray beam (3a, 3b).

13. X-ray imaging and detecting system (10) according to any one of the claims 9 to 12, being a fluorescence, XRF spectrometer (10), particularly a micro XRF spectrometer, wherein the X-ray tube (1) is a microfocus tube.

14. Use of an aperture system (4) in an X-ray imaging and detection system (10) according to claim 10 for obtaining stereoscopic image information by cropping an eccentrical first partial X-ray beam (5a, 17a) from an X-ray beam (3a, 3b), illuminating a grid point of a scanning grid of a target (7) with the focused first partial X-ray beam (17a) and obtaining a first image signal from the grid point, subsequently cropping an eccentrical second partial X-ray beam (5b, 17b) from the X-ray beam (3a, 3b), illuminating the grid point of the scanning grid of the target (7) with the focused second partial X-ray beam (17b) and obtaining a second image signal from the grid point, and combining the first image signal of the grid point and the second image signal of the grid point for generating a stereoscopic image signal of the grid point.

**Patentansprüche**

1. Verfahren zum Erhalten von Informationen eines stereoskopischen Bildes in einem Röntgenabbildungs- und -detektionssystem (10), das eine Röntgenröhre (1) mit einer Anode (2), die einen divergenten Röntgenstrahl (3a) emittiert, eine Kapillarlinse (6), die so konfiguriert ist, dass sie den divergenten Röntgenstrahl (3a) als konvergenten Röntgenstrahl (3b) auf ein Ziel (7) fokussiert, ein Apertursystem (4), eine Steuereinheit, die zum Abtasten des konvergenten Röntgenstrahls (3b) über ein Abtastgitter des Ziels (7) konfiguriert ist, und einen Detektor (8, 18), der zum Erfassen der von dem Ziel (7) emittierten oder durchgelassenen Röntgenstrahlung konfiguriert ist, wobei das Verfahren die folgenden Schritte umfasst:

Beschneiden eines exzentrischen ersten Röntgenteilstrahls (5a, 17a) aus dem divergenten oder konvergenten Röntgenstrahl (3a, 3b) mit dem Apertursystem (4), Beleuchten eines Gitterpunktes des Abtastgitters des Ziels (7) mit dem fokussierten ersten Röntgenteilstrahl (17a) und Erhalten eines ersten Bildsignals aus dem Gitterpunkt;

Beschneiden eines exzentrischen zweiten Röntgenteilstrahls (5b, 17b) aus dem divergenten oder konvergenten Röntgenstrahl (3a, 3b) mit dem Apertursystem (4), Beleuchten des Gitterpunkts des Abtastgitters des Ziels (7) mit dem fokussierten zweiten Röntgenteilstrahl (17b) und Erhalten eines zweiten Bildsignals von dem Gitterpunkt; und

Kombinieren des ersten Bildsignals des Gitterpunkts und des zweiten Bildsignals des Gitterpunkts zur Erzeugung eines stereoskopischen Bildsignals des Gitterpunkts.

2. Verfahren nach Anspruch 1, wobei das Erhalten des ersten Bildsignals umfasst: Erfassen, mit dem Detektor (8, 18), von Röntgenstrahlen, die als Reaktion auf einen fokussierten ersten Röntgenteilstrahl (17a), der auf den Gitterpunkt auftrifft, emittiert und/oder durchgelassen werden; und wobei das Erhalten des zweiten Bildsignals umfasst: Erfassen, mit dem Detektor (8, 18), von Röntgenstrahlen, die als Reaktion auf den fokussierten zweiten Röntgenteilstrahl (17b), der auf den Gitterpunkt auftrifft, emittiert und/oder durchgelassen werden.

3. Verfahren nach Anspruch 1 oder 2, wobei erste und zweite Bildsignale für jeden einer Vielzahl von Gitterpunkten eines Abtastgitters des Ziels (7) erhalten werden.

4. Verfahren nach Anspruch 3, wobei der konvergente Röntgenstrahl (3b) über die Gitterpunkte des Abtastgitters abgetastet wird und das Abtasten des Abtastgitters umfasst:

Erhalten eines ersten Bildsignals und eines zweiten Bildsignals für einen Gitterpunkt vor der Verschiebung zu einem anderen Gitterpunkt;

Erhalten von ersten Bildsignalen für jeden Gitterpunkt einer Zeile oder Spalte des Abtastgitters vor dem Erhalten von zweiten Bildsignalen für jeden Gitterpunkt der Zeile oder Spalte des Abtastgitters; oder

Erhalten von ersten Bildsignalen für jeden Gitterpunkt einer Zeile oder Spalte während des Abtastens der Zeile oder Spalte des Abtastgitters in einer Richtung, bevor zweite Bildsignale für jeden Gitterpunkt der Zeile oder Spalte während des Abtastens der Zeile oder Spalte in der entgegengesetzten Richtung erhalten werden.

5. Verfahren nach einem der vorhergehenden Ansprüche, wobei der erste Röntgenteilstrahl (5a, 17a) und/oder der zweite Röntgenteilstrahl (5b, 17b) in Bezug auf eine optische Achse (13) der Polykapillarlinse (6) exzentrisch ist, und wobei der erste Röntgenteilstrahl (5a, 17a) von dem zweiten Röntgenteilstrahl (5b, 17b) verschieden ist.

6. Verfahren nach einem der vorangehenden Ansprüche, wobei das Apertursystem (4) mindestens eine Lochblende (9) umfasst, wobei das Verfahren die folgenden Schritte umfasst:

Beschneiden des ersten Röntgenteilstrahls (5a, 17a) durch Einsetzen einer der mindestens einen Lochblenden (9) exzentrisch in den divergenten oder konvergenten Röntgenstrahl (3a, 3b); und

Beschneiden des zweiten Röntgenteilstrahls (5b, 17b) durch exzentrisches Verschieben der einen Lochblende (9) im divergenten oder konvergenten Röntgenstrahl (3a, 3b); oder

Beschneiden des zweiten Röntgenteilstrahls (5b, 17b) durch Einsetzen einer weiteren der mindestens einen Lochblende (9) exzentrisch in den divergenten oder konvergenten Röntgenstrahl (3a, 3b).

7. Verfahren nach einem der vorhergehenden Ansprüche, wobei sich ein erster Einfallswinkel des fokussierten ersten Röntgenteilstrahls (17a) auf das Ziel (7) von einem zweiten Einfallswinkel des fokussierten zweiten Röntgenteilstrahls (17b) auf das Ziel (7) unterscheidet.

8. Verfahren nach einem der vorhergehenden Ansprüche, das ferner den folgenden Schritt umfasst: Bestimmen von Tiefeninformationen des Gitterpunkts des Ziels (7) auf der Grundlage des ersten Bildsignals und des zweiten Bildsignals für den Gitterpunkt.

9. Röntgenabbildungs- und -detektionssystem (10), umfassend:

eine Röntgenröhre (1) mit einer Anode (2), die einen divergenten Röntgenstrahl (3a) emittiert;

eine Kapillarlinse (6), die so konfiguriert ist, dass sie den divergenten Röntgenstrahl (3a) als konvergenten Röntgenstrahl (3b) auf das Ziel (7) fokussiert;

einen Detektor (8, 18), der für die Erfassung der von dem Ziel (7) emittierten oder durchgelassenen Röntgenstrahlung konfiguriert ist;

ein Apertursystem (4); und

eine Steuereinheit, die für das Steuern von Folgendem konfiguriert ist:

Abtasten eines Abtastgitters des Ziels (7) mit dem konvergenten Röntgenstrahl (3b), selektives Beschneiden eines exzentrischen ersten Röntgenteilstrahls (5a, 17a) aus dem divergenten Röntgenstrahl (3a) oder aus dem konvergenten Röntgenstrahl (3b), um einen Gitterpunkt des Abtastgitters des Ziels (7) mit dem fokussierten ersten Röntgenteilstrahl (17a) zu beleuchten und ein erstes Bildsignal von dem Gitterpunkt zu erhalten;

selektives Beschneiden eines exzentrischen zweiten Röntgenteilstrahls (5b, 17b), der sich von dem ersten Röntgenteilstrahl (5a, 17a) des divergenten Röntgenstrahls (3a) oder des konvergenten Röntgenstrahls (3b) unterscheidet, um den Gitterpunkt des Abtastgitters des Ziels (7) mit dem fokussierten zweiten Röntgenteilstrahl (17b) zu beleuchten und ein zweites Bildsignal von dem Gitterpunkt zu erhalten; und

Kombinieren des ersten Bildsignals des Gitterpunkts und des zweiten Bildsignals des Gitterpunkts zur Erzeugung eines stereoskopischen Bildsignals des Gitterpunkts.

10. Röntgenabbildungs- und -detektionssystem (10) nach Anspruch 9, wobei das Apertursystem (4) mindestens eine Lochblende (9) umfasst, die so konfiguriert ist, dass sie selektiv in den divergenten Röntgenstrahl (3a) oder in den konvergenten Röntgenstrahl (3b) an exzentrischen Positionen in Bezug auf die optische Achse (13) der Kapillarlinse (6) eingesetzt wird.

11. Röntgenbildgebungs- und -detektionssystem (10) nach Anspruch 9 oder 10, wobei das Apertursystem (4) einen Revolver (4a) oder einen Schieber (4b) umfasst, die jeweils mindestens eine Lochblende (9), die so konfiguriert ist, dass sie in mindestens zwei verschiedene exzentrische Positionen des divergenten Röntgenstrahls (3a) oder des konvergenten Röntgenstrahls (3b) eingesetzt wird, aufweisen.

12. Röntgenabbildungs- und -detektionssystem (10) nach Anspruch 9 oder 10, wobei das Apertursystem (4) einen Revolver (4a) oder einen Schieber (4b) umfasst, die jeweils eine erste Lochblende, die so konfiguriert ist, dass sie in eine erste exzentrische Position des divergenten oder konvergenten Röntgenstrahls (3a, 3b) eingesetzt wird, und eine zweite Lochblende, die so konfiguriert ist, dass sie in eine zweite exzentrische Position des divergenten oder konvergenten Röntgenstrahls (3a, 3b) eingesetzt wird, aufweisen.

13. Röntgenabbildungs- und -detektionssystem (10) nach einem der Ansprüche 9 bis 12, das ein Fluoreszenz-, XRF-Spektrometer (10), insbesondere ein Mikro-RFA-Spektrometer, ist, wobei die Röntgenröhre (1) eine Mikrofokusröhre ist.

14. Verwendung eines Apertursystems (4) in einem Röntgenabbildungs- und -detektionssystem (10) nach Anspruch 10 zum Erhalten von Informationen eines stereoskopischen Bildes durch Beschneiden eines exzentrischen ersten Röntgenteilstrahls (5a, 17a) aus einem Röntgenstrahl (3a, 3b), Beleuchten eines Gitterpunktes eines Abtastgitters eines Ziels (7) mit dem fokussierten ersten Röntgenteilstrahl (17a) und Erhalten eines ersten Bildsignals aus dem Gitterpunkt, anschließendes Beschneiden eines exzentrischen zweiten Röntgenteilstrahls (5b, 17b) aus dem Röntgenstrahl (3a, 3b), Beleuchten des Gitterpunkts des Abtastgitters des Ziels (7) mit dem fokussierten zweiten Röntgenteilstrahl (17b) und Erhalten eines zweiten Bildsignals von dem Gitterpunkt, und Kombinieren des ersten Bildsignals des Gitterpunkts und des zweiten Bildsignals des Gitterpunkts zur Erzeugung eines stereoskopischen Bildsignals des Gitterpunkts.

**Revendications**

1. Procédé d'obtention d'informations d'image stéréoscopique dans un système d'imagerie et de détection à rayons X (10) comprenant un tube à rayons X (1) avec une anode (2) émettant un faisceau de rayons X divergent (3a), une lentille capillaire (6) configurée pour focaliser le faisceau de rayons X divergent (3a) sous la forme d'un faisceau de rayons X convergent (3b) sur une cible (7), un système d'ouverture (4), une unité de commande configurée pour balayer le faisceau de rayons X convergent (3b) sur une grille de balayage de la cible (7), et un détecteur (8, 18) configuré pour détecter le rayonnement X émis ou transmis par la cible (7), le procédé comprenant les étapes suivantes :

recadrer un premier faisceau partiel de rayons X excentrique (5a, 17a) à partir du faisceau de rayons X divergent ou convergent (3a, 3b) à l'aide du système d'ouverture (4), éclairer un point de grille de balayage de la cible (7) avec le premier faisceau partiel de rayons X focalisé (17a) et obtenir un premier signal d'image à partir du point de la grille ;

recadrer un deuxième faisceau partiel de rayons X excentrique (5b, 17b) à partir du faisceau de rayons X divergent ou convergent (3a, 3b) avec le système d'ouverture (4), éclairer le point de grille de grille de balayage de la cible (7) avec le deuxième faisceau partiel de rayons X focalisé (17b) et obtenir un deuxième signal d'image à partir du point de grille ; et

combiner le premier signal d'image du point de grille et le deuxième signal d'image du point de grille pour générer un signal d'image stéréoscopique du point de grille.

**2.** Procédé selon la revendication 1, dans lequel l'obtention du premier signal d'image comprend : la détection, à l'aide du détecteur (8, 18), de rayons X émis et/ou transmis en réponse à un premier faisceau partiel de rayons X focalisé (17a) incident sur le point de grille ; et dans lequel l'obtention du deuxième signal d'image comprend la détection, à l'aide du détecteur (8, 18), des rayons X émis et/ou transmis en réponse à un deuxième faisceau partiel de rayons X focalisé (17b) incident sur le point de la grille.

**3.** Procédé selon la revendication 1 ou 2, dans lequel le premier et deuxième signaux d'image sont obtenus pour chacun d'une pluralité de points de grille d'une grille de balayage de la cible (7).

**4.** Procédé selon la revendication 3, dans lequel le faisceau de rayons X convergent (3b) est balayé sur les points de la grille de balayage et le balayage de la grille de balayage comprend :

obtenir un premier signal d'image et un deuxième signal d'image pour un point de grille avant de passer à un autre point de grille ;
obtenir des premiers signaux d'image pour chaque point de grille d'une ligne ou d'une colonne de la grille de balayage avant d'obtenir des deuxièmes signaux d'image pour chaque point de grille de la ligne ou de la colonne de la grille de balayage ; ou
obtenir des premiers signaux d'image pour chaque point de grille d'une ligne ou d'une colonne lors du balayage de la ligne ou de la colonne de la grille de balayage dans une direction avant d'obtenir des deuxièmes signaux d'image pour chaque point de grille de la ligne ou de la colonne lors du balayage de la ligne ou de la colonne dans la direction opposée.

**5.** Procédé selon l'une quelconque des revendications précédentes, dans lequel le premier faisceau partiel de rayons X (5a, 17a) et/ou le deuxième faisceau partiel de rayons X (5b, 17b) est excentré par rapport à un axe optique (13) de la lentille polycapillaire (6), et dans lequel le premier faisceau partiel de rayons X (5a, 17a) est différent du deuxième faisceau partiel de rayons X (5b, 17b).

**6.** Procédé selon l'une quelconque des revendications précédentes, dans lequel le système d'ouverture (4) comprend au moins un sténopé (9), le procédé comprenant les étapes suivantes :

recadrer le premier faisceau partiel de rayons X (5a, 17a) en insérant l'un de l'au moins un sténopé (9) de manière excentrée dans le faisceau de rayons X divergent ou convergent (3a, 3b) ; et
recadrer le deuxième faisceau partiel de rayons X (5b, 17b) en déplaçant le sténopé (9) de manière excentrée dans le faisceau de rayons X divergent ou convergent (3a, 3b) ; ou
recadrer le deuxième faisceau partiel de rayons X (5b, 17b) en insérant un autre de l'au moins un sténopé (9) de manière excentrée dans le faisceau de rayons X divergent ou convergent (3a, 3b).

**7.** Procédé selon l'une quelconque des revendications précédentes, dans lequel un premier angle d'incidence du premier faisceau partiel de rayons X focalisé (17a) sur la cible (7) diffère d'un deuxième angle d'incidence du deuxième faisceau partiel de rayons X focalisé (17b) sur la cible (7).

**8.** Procédé selon l'une quelconque des revendications précédentes, comprenant en outre l'étape consistant à : déterminer des informations de profondeur du point de grille de la cible (7) sur la base du premier signal d'image et du deuxième signal d'image pour le point de grille.

**9.** Système d'imagerie et de détection à rayons X (10), comprenant :

un tube à rayons X (1) avec une anode (2) émettant un faisceau de rayons X divergent (3a) ;
une lentille capillaire (6) configurée pour focaliser le faisceau de rayons X divergent (3a) en un faisceau de rayons X convergent (3b) sur la cible (7) ;
un détecteur (8, 18) configuré pour détecter le rayonnement X émis ou transmis par la cible (7) ;
un système d'ouverture (4) ; et
une unité de commande configurée pour commander :

balayer une grille de balayage de la cible (7) avec le faisceau de rayons X convergent (3b),
recadrer sélectivement un premier faisceau partiel de rayons X excentrique (5a, 17a) à partir du faisceau de rayons X divergent (3a) ou du faisceau de rayons X convergent (3b), afin d'éclairer un point de grille de balayage de la cible (7) avec le premier faisceau partiel de rayons X focalisé (17a) et d'obtenir un premier signal d'image à partir du point de la grille ;

recadrer sélectivement un deuxième faisceau partiel de rayons X excentrique (5b, 17b) différent du premier faisceau partiel de rayons X (5a, 17a) à partir du faisceau de rayons X divergent (3a) ou du faisceau de rayons X convergent (3b), afin d'éclairer le point de grille de la grille de balayage de la cible (7) avec le deuxième faisceau partiel de rayons X focalisé (17b) et d'obtenir un deuxième signal d'image à partir du point de grille ; et

combiner le premier signal d'image du point de grille et le deuxième signal d'image du point de grille pour générer un signal d'image stéréoscopique du point de grille.

10. Système d'imagerie et de détection à rayons X (10) selon la revendication 9, dans lequel le système d'ouverture (4) comprend au moins un sténopé (9) configuré pour être inséré sélectivement dans le faisceau de rayons X divergent (3a) ou dans le faisceau de rayons X convergent (3b) à des positions excentriques par rapport à l'axe optique (13) de la lentille capillaire (6).

11. Système d'imagerie et de détection à rayons X (10) selon la revendication 9 ou 10, dans lequel le système d'ouverture (4) comprend un revolver (4a) ou un curseur (4b), chacun ayant au moins un sténopé (9) configuré pour être inséré à au moins deux positions excentriques différentes du faisceau de rayons X divergent (3a) ou du faisceau de rayons X convergent (3b).

12. Système d'imagerie et de détection à rayons X (10) selon la revendication 9 ou 10, dans lequel le système d'ouverture (4) comprend un revolver (4a) ou un curseur (4b), chacun ayant un premier sténopé configuré pour être inséré à une première position excentrique du faisceau de rayons X divergent ou convergent (3a, 3b) et un deuxième sténopé configuré pour être inséré à une deuxième position excentrique du faisceau de rayons X divergent ou convergent (3a, 3b).

13. Système d'imagerie et de détection à rayons X (10) selon l'une quelconque des revendications 9 à 12, étant un spectromètre de fluorescence, XRF (10), en particulier un spectromètre micro XRF, dans lequel le tube à rayons X (1) est un tube microfoyer.

14. Utilisation d'un système d'ouverture (4) dans un système d'imagerie et de détection à rayons X (10) selon la revendication 10 pour obtenir des informations d'image stéréoscopique en recadrant un premier faisceau partiel de rayons X excentrique (5a, 17a) à partir d'un faisceau de rayons X (3a, 3b), en éclairant un point de grille d'une grille de balayage d'une cible (7) avec le premier faisceau partiel de rayons X focalisé (17a) et en obtenant un premier signal d'image à partir du point de grille, recadrer ensuite un deuxième faisceau partiel de rayons X excentrique (5b, 17b) à partir du faisceau de rayons X (3a, 3b), éclairer le point de grille de la grille de balayage de la cible (7) avec le deuxième faisceau partiel de rayons X focalisé (17b) et obtenir un deuxième signal d'image à partir du point de grille, et combiner le premier signal d'image du point de grille et le deuxième signal d'image du point de grille pour générer un signal d'image stéréoscopique du point de grille.

FIG. 1

FIG. 2

FIG. 3

FIG. 4

(A)

(B)

FIG. 5

(A)

(B)

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016023975 A1
- WO 2007043390 A1
- US 646362 A
- DE 102006036272 B3
- WO 2016092300 A1

**Non-patent literature cited in the description**

- **CAROLYN A. MACDONALD.** Focusing Polycapillary Optics and Their Applications. *X-Ray Optics and Instrumentation,* vol. 2010